# EUROPEAN PATENT APPLICATION

(11) **EP 4 717 952 A1**
(43) Date of publication of application: **01.04.2026**
(21) Application number: 25204181.9
(22) Date of filing: 24.09.2025
(51) Int. Cl.: F16K 11/085, F16K 27/06, F16K 11/083

(54) **MANIFOLD**

(30) Priority: 25.09.2024 JP 2024166239
(71) Applicant: AISIN CORPORATION, Aichi 448-8650 (JP)
(72) Inventor: Tanaka, Hirokazu, Kariya 448-8650 (JP); Yumisashi, Naoto, Kariya 448-8650 (JP)
(74) Representative: Kramer Barske Schmidtchen Patentanwälte PartG mbB

(57) **Abstract**

Provided is a manifold (1) including a rotary valve (30) that enables flow rate control and flow path switching.

The manifold (1) includes: a manifold body (5) within which a plurality of flow paths (12, 12a, and 12b) through which fluid flows are formed; and a rotary valve (30) that is formed by arranging a valve body (34) rotating about an axis (AX) in a cylindrical valve chamber (16) formed in the manifold body (5) and that controls flow of the fluid. The valve body (34) includes a flow control valve portion (34a), a switching valve portion (34b), and a partition portion (34g) that separates the flow control valve portion (34a) and the switching valve portion (34b) from each other.

## Description

### TECHNICAL FIELD

This disclosure generally relates to a manifold.

### BACKGROUND DISCUSSION

In recent years, vehicles including a motor as a traveling drive source (a hybrid electric vehicle (HEV), a plug-in hybrid electric vehicle (PHEV), a battery electric vehicle (BEV), a fuel cell electric vehicle (FCEV), and the like) have been widely accepted. Hereinafter, the above-described vehicles are collectively referred to as "electric vehicles". Since an electric vehicle includes a lot of devices that need to be cooled, such as a motor (including an internal-combustion engine like an engine), a battery, an air conditioner, and an ECU, the devices are cooled by forming a cooling circuit through which fluid, such as cooling liquid, coolant, and oil, is circulated. On this occasion, by forming flow paths of the cooling circuit within the manifold, it is possible to reduce an amount of routing of piping through which the fluid flows and thereby simplify a flow path configuration, as well as miniaturizing the cooling circuit. On this occasion, in order to control a flow of fluid flowing through the flow paths in the manifold, a fluid control valve such as a rotary valve is arranged in the manifold.

JP2019-135396A (Reference 1) discloses a rotary valve that performs switching or opening/closing of flow paths through which fluid flows and also adjusts a flow rate of the fluid (in Reference 1, referred to as a switching flow control valve). The rotary valve includes a cylindrical main valve and an auxiliary valve, which rotate independently. The main valve and the auxiliary valve are housed within an internal space of a valve chamber. The auxiliary valve rotates coaxially with the main valve and is arranged on an inner side in the radial direction with respect to the main valve.

In the valve chamber, two radial direction holes, namely a first radial direction hole and a second radial direction hole, that are through-holes through which fluid flows in from an outside and an axial direction hole being a through-hole through which the fluid flows out to the outside are formed. The main valve has a circular main valve through-hole, and the auxiliary valve has a substantially elliptical auxiliary valve through-hole a length of which in a direction along a rotational axis varies in a circumferential direction. By rotating the main valve and causing the main valve through-hole to face the first radial direction hole or the second radial direction hole, the first radial direction hole and the second radial direction hole, which serve as inflow paths for the fluid, are switched. The fluid flows only through a site where the auxiliary valve rotates and the main valve through-hole and the auxiliary valve through-hole overlap each other, and flows out through an axial direction hole. That is, by varying an amount of overlap between the main valve through-hole and the auxiliary valve through-hole, a flow rate of the fluid to be caused to flow out is controlled.

Since, in the rotary valve in Reference 1, the main valve and the auxiliary valve are used, a size of the rotary valve increases, a structure of the rotary valve becomes complex, and the number of assembly hours also increases. In addition, since the main valve and the auxiliary valve rotate independently, a separate drive source is required for each of the main valve and the auxiliary valve, as a result of which the rotary valve further increases in size and a manufacturing cost also increases. Therefore, there has been room for improvement in the structure of the rotary valve.

A need thus exists for a manifold including a rotary valve that has a simple configuration and that enables flow rate control and flow path switching to be performed.

### SUMMARY

One embodiment of a manifold according to the present disclosure includes: a manifold body within which a plurality of flow paths through which fluid flows are formed; and a rotary valve that is formed by arranging a valve body rotating about an axis in a cylindrical valve chamber formed in the manifold body and that controls flow of the fluid, and the valve body includes a switching valve portion, a flow control valve portion, and a partition portion that separates the switching valve portion and the flow control valve portion from each other.

According to the present embodiment, since the manifold includes the rotary valve, both the flow rate control and the flow path switching of the fluid flowing through the flow paths can be performed at the same time by rotating the valve body. Since the rotary valve enables the flow rate control and the flow path switching to be performed at the same time by rotating one valve body, compared with the rotary valve disclosed in Reference 1, the configuration can be simplified and the size can be reduced, and the number of assembly hours can also be reduced and a manufacturing cost can thereby be reduced.

### BRIEF DESCRIPTION OF THE DRAWINGS

The foregoing and additional features and characteristics of this disclosure will become more apparent from the following detailed description considered with the reference to the accompanying drawings, wherein:
FIG. 1 is a front view illustrating a manifold according to the present embodiment;
FIG. 2 is a perspective view illustrating a rotor of a first rotary valve;
FIG. 3 is a cross-sectional view taken along an arrow line III-III in FIG. 2;
FIG. 4 is a cross-sectional view taken along an arrow line IV-IV in FIG. 2;
FIG. 5 is a cross-sectional view illustrating a control state of fluid by a first valve portion and a second valve portion that are in a first state;
FIG. 6 is a cross-sectional view illustrating a control state of the fluid by the first valve portion and the second valve portion that are in a second state;
FIG. 7 is a cross-sectional view illustrating a control state of the fluid by the first valve portion and the second valve portion that are in a third state;
FIG. 8 is a cross-sectional view illustrating a control state of the fluid by the first valve portion and the second valve portion that are in a fourth state;
FIG. 9 is a cross-sectional view illustrating a control state of the fluid by the first valve portion and the second valve portion that are in a fifth state; and
FIG. 10 is a cross-sectional view illustrating a control state of the fluid by the first valve portion and the second valve portion that are in a sixth state.

### DETAILED DESCRIPTION

An embodiment of a manifold according to the present disclosure will be described below in detail, using the drawings. Note that the embodiment described below is an example for describing the manifold and is not intended to limit the manifold according to the present disclosure only to the embodiment. Therefore, the manifold according to the present disclosure can be embodied in various aspects without departing from the scope of the present disclosure.

### [Configuration of Manifold]

A manifold 1 according to the present embodiment is used in a vehicle including a motor as a traveling drive source, such as a hybrid electric vehicle (HEV), a plug-in hybrid electric vehicle (PHEV), a battery electric vehicle (BEV), and a fuel cell electric vehicle (FCEV). Hereinafter, the above-described vehicles are collectively referred to as "electric vehicles". The manifold 1 is a device into which a flow path for flowing coolant (an example of fluid) to cool devices that are required to be cooled, such as a motor of an electric vehicle (including an internal-combustion engine, such as an engine), a battery, an air conditioner, and an ECU, a rotary valve that controls flow of the coolant, and a water pump that pressure-feeds the coolant are integrated.

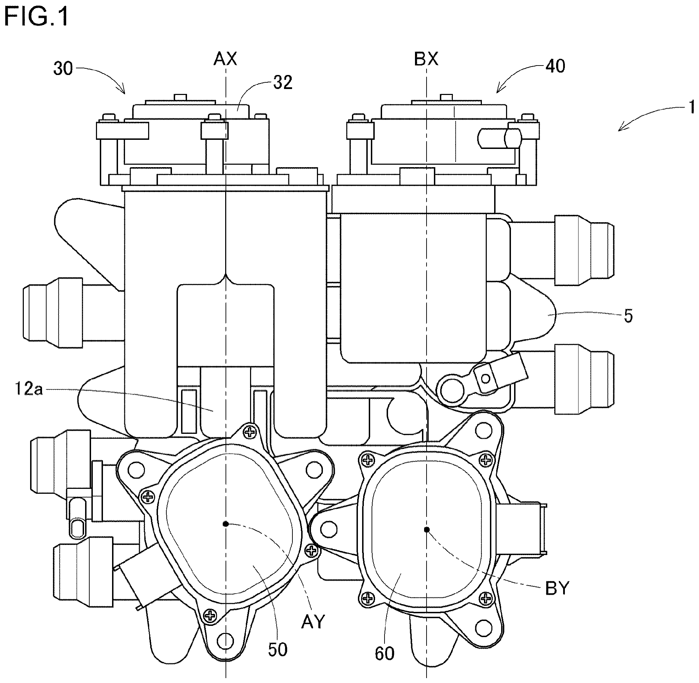

The manifold 1 includes, as illustrated in FIG. 1, a first rotary valve 30 (an example of the rotary valve), a second rotary valve 40, a first water pump 50 (an example of the pump), a second water pump 60, and a housing 5 (an example of a manifold body) in which a plurality of flow paths 12 through which the coolant is flowed to the foregoing are formed. The housing 5 is formed by joining a plurality of housing components by welding or the like and thereby integrating the housing components with one another. The coolant is cooling water such as long-life coolant (LLC) or insulating oil such as paraffin-based oil.

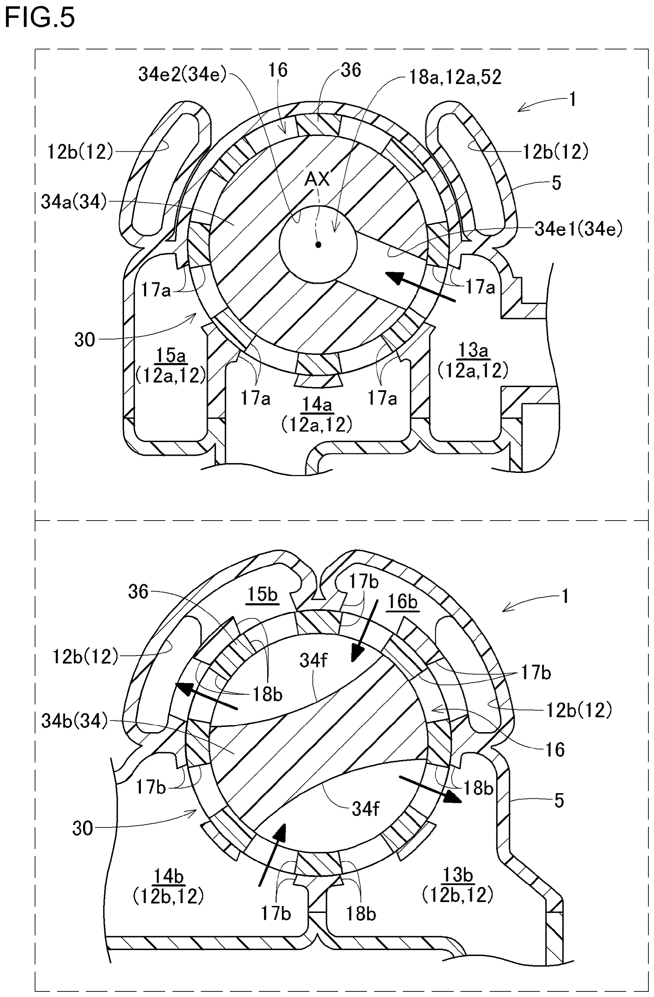

The plurality of flow paths 12 (see FIG. 5) formed in the housing 5 is a concept that includes both an inflow path for causing the coolant to flow into one or more of the first rotary valve 30, the second rotary valve 40, the first water pump 50, and the second water pump 60 and an outflow path for causing the coolant to flow out from one or more of the first rotary valve 30, the second rotary valve 40, the first water pump 50, and the second water pump 60. As illustrated in FIG. 1, in the housing 5, a plurality of inflow ports that are inlets for the coolant flowing in from the outside of the manifold 1 and are connected to the flow paths 12 and a plurality of outflow ports that are connected to the flow paths 12 and are outlets for the coolant flowing out to the outside of the manifold 1 are formed.

In the housing 5 of the present embodiment, the first rotary valve 30, the second rotary valve 40, the first water pump 50, and the second water pump 60 are all attached to the housing 5. The first rotary valve 30 and the second rotary valve 40 are attached to the housing 5 in such a posture that a rotation axis AX (an example of an axis) of the first rotary valve 30 and a rotation axis BX of the second rotary valve 40 are parallel with each other. In addition, the first water pump 50 and the second water pump 60 are attached to the housing 5 in such a posture that a rotation axis AY of the first water pump 50 and a rotation axis BY of the second water pump 60 are parallel with each other. In the present embodiment, the first rotary valve 30 and the first water pump 50 are arranged in such a manner that the rotation axis AX and the rotation axis AY intersect at right angles on the same plane. In addition, the second rotary valve 40 and the second water pump 60 are arranged in such a manner that the rotation axis BX and the rotation axis BY intersect at right angles on the same plane.

### [Configuration of First Rotary Valve]

Each of the first rotary valve 30 and the second rotary valve 40 in the present embodiment has a configuration enabling both flow rate control of fluid flowing through the flow paths 12 and switching control of the flow paths 12 (flow path switching) through which the fluid is flowed to be executed. Since the first rotary valve 30 and the second rotary valve 40 have the same or similar configuration, only the configuration of the first rotary valve 30 will be described in the present embodiment. Note that since the configurations of the first water pump 50 and the second water pump 60 are known, detailed descriptions thereof are omitted.

The first rotary valve 30 includes a valve chamber 16 that is a cylindrical opening formed in the housing 5, a cylindrical sealing material 36 that is arranged in close contact with an inner circumferential surface of the valve chamber 16, a columnar-shaped rotor 34 (an example of a valve body) that is arranged in close contact with an inner circumferential surface of the sealing material 36, and an actuator 32 that generates driving force to rotate the rotor 34. The sealing material 36 comes into close contact with the inner circumferential surface of the valve chamber 16 and an outer circumferential surface of the rotor 34 and prevents cooling water from leaking from the flow paths 12. The sealing material 36 is fixed to the housing 5 by a known method, and never corotates even when the rotor 34 rotates.

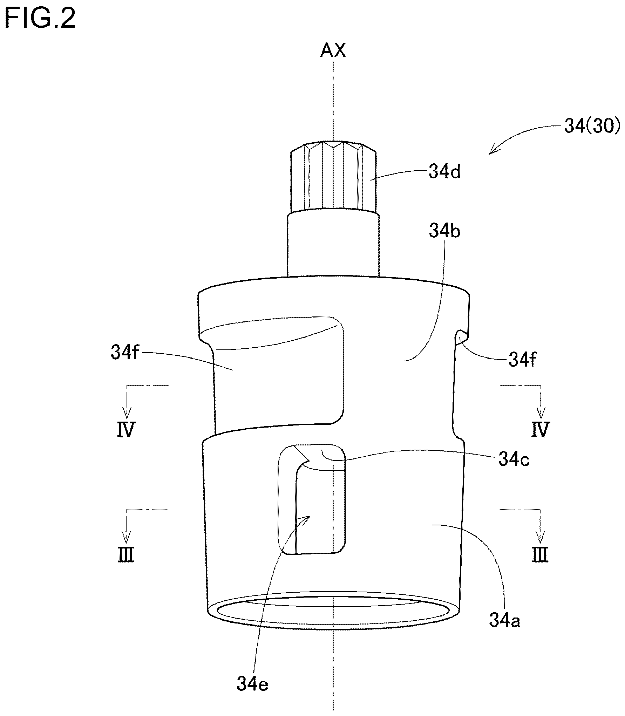

The rotor 34 in the present embodiment has, as illustrated in FIGS. 2 to 4, a shape into which a first valve portion 34a (an example of a flow control valve portion) that is arranged on the far side from the actuator 32 along the rotation axis AX and a second valve portion 34b (an example of a switching valve portion) that is arranged on the near side to the actuator 32 are integrated with each other. In an example, the first valve portion 34a and the second valve portion 34b are adjacent to each other along the rotation axis. The first valve portion 34a and the second valve portion 34b are separated by a partition portion 34c and are not in communication with each other. The rotor 34 has a shaft portion 34d arranged coaxially with the rotation axis AX. The shaft portion 34d is connected to the actuator 32, and rotational driving force is transmitted from the actuator 32 to the shaft portion 34d. When the rotor 34 rotates driven by the rotational driving force from the actuator 32, the first valve portion 34a and the second valve portion 34b rotate integrally with each other. In the rotor 34 of the present embodiment, the first valve portion 34a performs the flow rate control of the fluid, and the second valve portion 34b performs the switching control of the flow paths 12.

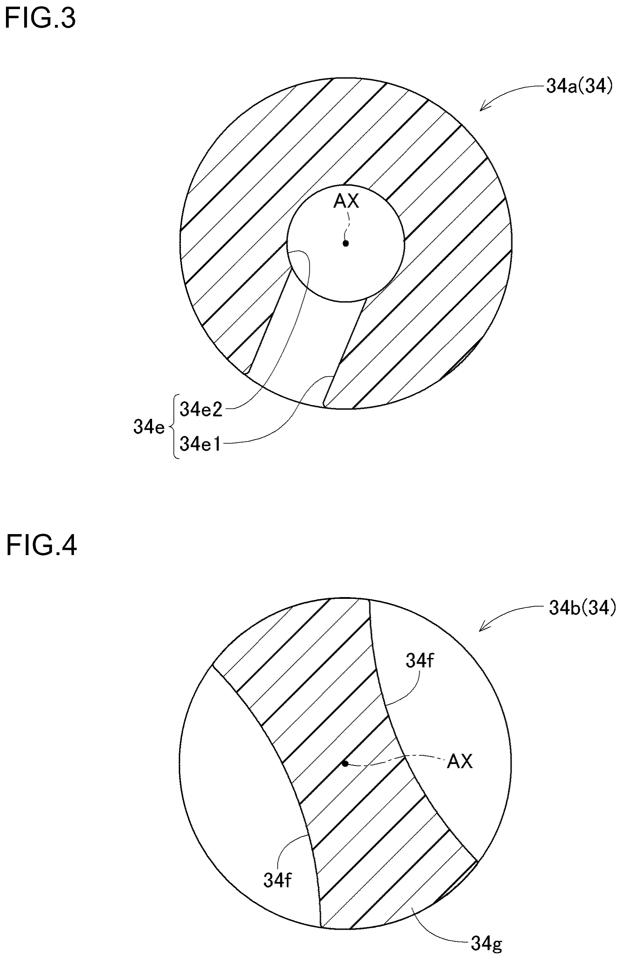

The first valve portion 34a has a flow control flow path 34e. The flow control flow path 34e is formed, as illustrated in FIG. 3, by connecting a radial flow path 34e1 that extends in a radial direction pointing from the outer circumferential surface of the rotor 34 towards the rotation axis AX and an axial flow path 34e2 that extends coaxially with the rotation axis AX in a direction moving away from the shaft portion 34d. That is, the flow control flow path 34e is a flow path bent in an L-shape.

The second valve portion 34b has two switching flow paths 34f. Each of the switching flow paths 34f has, as illustrated in FIG. 4, a shape formed by cutting off a portion of the outer circumferential surface of the rotor 34 in a range that makes a central angle of 120 degrees in an inward radial direction. The two switching flow paths 34f are formed at positions that are point symmetric with respect to the rotation axis AX, and due to a wall portion 34g (an example of a partition portion) interposed therebetween, the switching flow paths 34f are not connected to each other.

In association with the rotor 34 of the first rotary valve 30 partitioned into the first valve portion 34a and the second valve portion 34b, the plurality of flow paths 12 are divided into first flow paths 12a (an example of the flow path) that cause the fluid to flow in and flow out to and from the first valve portion 34a and second flow paths 12b (another example of the flow path) that cause the fluid to flow in and flow out to and from the second valve portion 34b, in the housing 5 of the present embodiment.

### [Control of Flow of Fluid]

Next, control of flow of fluid by the first valve portion 34a and the second valve portion 34b when the rotor 34 of the first rotary valve 30 is rotated about the rotation axis AX will be described using FIGS. 5 to 10. The flow rate control and the flow path switching by the first rotary valve 30 in the present embodiment are divided into six types of states, namely first to sixth states, depending on positions of the flow control flow path 34e and the switching flow paths 34f changing in association with the rotation of the rotor 34.

The housing 5 has, as illustrated in FIGS. 5 to 10, a first preliminary chamber 13a, a second preliminary chamber 14a, and a third preliminary chamber 15a at ends of first flow paths 12a that are connected to the first valve portion 34a of the rotor 34. In addition, the housing 5 has a fourth preliminary chamber 13b, a fifth preliminary chamber 14b, a sixth preliminary chamber 15b, and a seventh preliminary chamber 16b at ends of the second flow paths 12b that are connected to the second valve portion 34b of the rotor 34.

In the manifold 1 of the present embodiment, fluid flowing through first flow paths 12a flows in from one of the first preliminary chamber 13a, the second preliminary chamber 14a, and the third preliminary chamber 15a to the radial flow path 34e1 of the flow control flow path 34e of the first valve portion 34a of the rotor 34, flows through the axial flow path 34e2, and flows out to a first flow path 12a formed in the housing 5 in such a manner as to be coaxial with the rotation axis AX. The fluid that flows out from the axial flow path 34e2 and flows through the first flow path 12a flows into an inflow port 52 of the first water pump 50, is pressurized in the first water pump 50, and is pressure-fed. In addition, it is configured such that fluid that flows through second flow paths 12b flows in from the fifth preliminary chamber 14b and the seventh preliminary chamber 16b to the switching flow paths 34f of the second valve portion 34b of the rotor 34 and flows out to the fourth preliminary chamber 13b and the sixth preliminary chamber 15b.

As described above, the sealing material 36 is fixed to the housing 5 and never corotates even when the rotor 34 rotates. Therefore, an opening in the first preliminary chamber 13a, the second preliminary chamber 14a, or the third preliminary chamber 15a that faces the flow control flow path 34e of the first valve portion 34a and an opening in the sealing material 36 that faces the flow control flow path 34e of the first valve portion 34a overlap each other and form a single opening. In the present embodiment, since the first valve portion 34a (rotor 34) rotates about the rotation axis AX, there are four overlapping openings. Hereinafter, the four openings are referred to as first inlets 17a. An upstream end of a first flow path 12a that is formed in the housing 5 in such a way as to be connected to a downstream end of the axial flow path 34e2 of the flow control flow path 34e is referred to as a first outlet 18a. The four first inlets 17a are arranged in the circumferential direction at intervals each of which makes a central angle of 45 degrees.

In addition, openings in the fourth preliminary chamber 13b, the fifth preliminary chamber 14b, the sixth preliminary chamber 15b, and the seventh preliminary chamber 16b that face the switching flow paths 34f of the second valve portion 34b and openings in the sealing material 36 that face the switching flow paths 34f of the second valve portion 34b overlap each other and form single openings. In the present embodiment, since the second valve portion 34b (rotor 34) rotates about the rotation axis AX, there are eight overlapping openings. Hereinafter, out of the eight openings, four openings in total including two openings formed in the fifth preliminary chamber 14b and two openings formed in the seventh preliminary chamber 16b are referred to as second inlets 17b. In addition, four openings in total including two openings formed in the fourth preliminary chamber 13b and two openings formed in the sixth preliminary chamber 15b are referred to as second outlets 18b. The eight openings in total that face the second valve portions 34b are arranged in the circumferential direction at intervals each of which makes a central angle of 45 degrees. Specifically, as illustrated in the drawing on the lower side of FIG. 5, the two second outlets 18b formed in the fourth preliminary chamber 13b, the two second inlets 17b formed in the fifth preliminary chamber 14b, the two second outlets 18b formed in the sixth preliminary chamber 15b, and the two second inlets 17b formed in the seventh preliminary chamber 16b are arranged in this order in a clockwise direction.

### [First State]

The first state is a state in which, as illustrated in the drawing on the upper side of FIG. 5, the flow control flow path 34e of the first valve portion 34a of the rotor 34 faces only the first inlet 17a of the first preliminary chamber 13a. On this occasion, only fluid in the first preliminary chamber 13a among the fluid flowing through the first flow paths 12a flows into the radial flow path 34e1 of the flow control flow path 34e.

Although even a state in which the rotor 34 has rotated to some extent in the clockwise direction or in a counterclockwise direction from the state in FIG. 5 is still the first state, when area of a portion of the first inlet 17a of the first preliminary chamber 13a that faces the flow control flow path 34e diminishes, a flow rate of the fluid in the first preliminary chamber 13a flowing into the flow control flow path 34e diminishes according to the facing area. In other words, by rotating the rotor 34, the flow rate of the fluid flowing into the flow control flow path 34e can be controlled (flow rate control). The fluid that has flowed into the radial flow path 34e1 of the flow control flow path 34e flows out from the axial flow path 34e2, flows through a first flow path 12a, and flows into the inflow port 52 of the first water pump 50.

In the first state, the second valve portion 34b is in a state illustrated in the drawing on the lower side of FIG. 5. On this occasion, the fluid in the fifth preliminary chamber 14b flows into one of the switching flow paths 34f from one of the second inlets 17b and flows out from one of the second outlets 18b to the fourth preliminary chamber 13b, and the fluid in the seventh preliminary chamber 16b also flows into the other of the switching flow paths 34f from one of the second inlets 17b and flows out from one of the second outlets 18b to the sixth preliminary chamber 15b.

### [Second State]

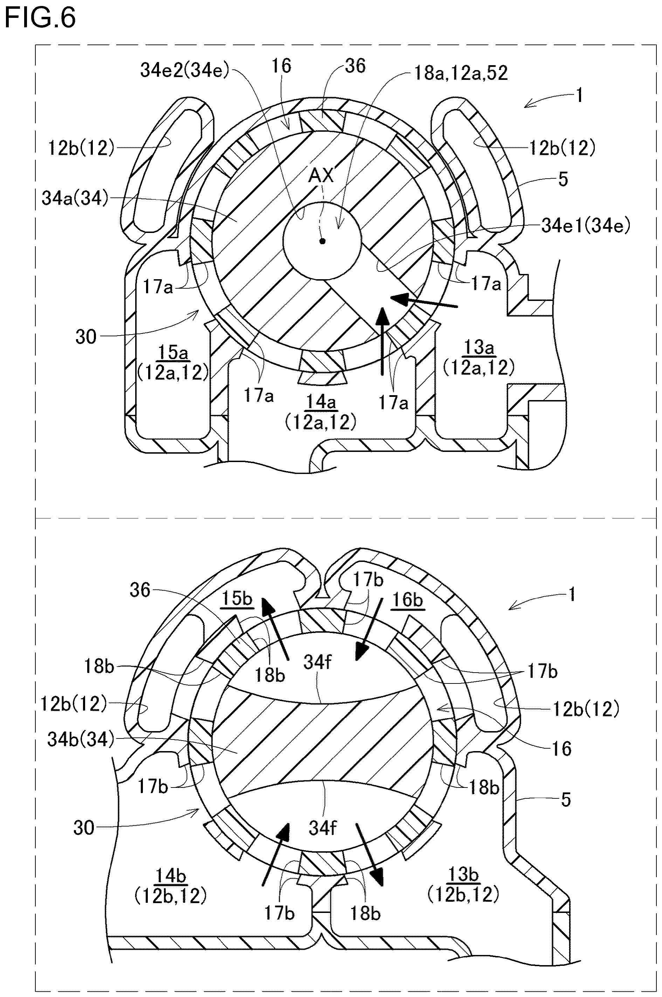

The second state is a state in which, as illustrated in the drawing on the upper side of FIG. 6, the flow control flow path 34e of the first valve portion 34a of the rotor 34 faces both the first inlet 17a of the first preliminary chamber 13a and one of the first inlets 17a of the second preliminary chamber 14a. In FIG. 6, the rotor 34 is rotated in the clockwise direction by 22.5 degrees from the first state illustrated in FIG. 5. On this occasion, the fluid in the first preliminary chamber 13a and fluid in the second preliminary chamber 14a among the fluid flowing through the first flow path 12a flows into the radial flow path 34e1 of the flow control flow path 34e. In the state in FIG. 6, area of the portion of the first inlet 17a of the first preliminary chamber 13a that faces the flow control flow path 34e is the same as area of a portion of the one of the first inlets 17a of the second preliminary chamber 14a that faces the flow control flow path 34e, and the fluid in the first preliminary chamber 13a and the fluid in the second preliminary chamber 14a flow into the flow control flow path 34e by the same amount. Note, however, that a total flow rate of the fluid flowing into the flow control flow path 34e is less than that in the first state. This is because total area of the portions of the first inlets 17a facing the flow control flow path 34e is smaller than that in the first state.

Even a state in which the rotor 34 has rotated to some extent in the clockwise direction or in the counterclockwise direction from the state in FIG. 6 is still the second state. On this occasion, as long as the first inlet 17a of the first preliminary chamber 13a and the one of the first inlets 17a of the second preliminary chamber 14a face the flow control flow path 34e, the total flow rate of the fluid flowing into the flow control flow path 34e does not change. However, when the rotor 34 rotates, the area of the portion of the first inlet 17a of the first preliminary chamber 13a that faces the flow control flow path 34e and the area of the portion of the one of the first inlet 17a of the second preliminary chamber 14a that faces the flow control flow path 34e change. When the areas change, a ratio of the flow rate of the fluid flowing in from the first preliminary chamber 13a to the flow control flow path 34e and the flow rate of the fluid flowing in from the second preliminary chamber 14a to the flow control flow path 34e change according to the facing areas. The fluid that has flowed into the radial flow path 34e1 of the flow control flow path 34e, as with the first state, flows out from the axial flow path 34e2, flows through a first flow path 12a, and flows into the inflow port 52 of the first water pump 50.

In the second state, the second valve portion 34b is in a state illustrated in the drawing on the lower side of FIG. 6. On this occasion, as with the first state, the fluid in the fifth preliminary chamber 14b also flows into the one of the switching flow paths 34f from the one of the second inlets 17b and flows out from the other of the second outlets 18b to the fourth preliminary chamber 13b, and the fluid in the seventh preliminary chamber 16b also flows into the other of the switching flow paths 34f from the one of the second inlets 17b and flows out from the other of the second outlets 18b to the sixth preliminary chamber 15b. A flow rate of the fluid flowing out from the fifth preliminary chamber 14b to the fourth preliminary chamber 13b via the one of the switching flow paths 34f in the second state is the same as the flow rate of the fluid flowing out from the fifth preliminary chamber 14b to the fourth preliminary chamber 13b via the one of the switching flow paths 34f in the first state and does not change. In addition, a flow rate of the fluid flowing out from the seventh preliminary chamber 16b to the sixth preliminary chamber 15b via the other of the switching flow paths 34f in the second state is the same as the flow rate of the fluid flowing out from the seventh preliminary chamber 16b to the sixth preliminary chamber 15b via the other of the switching flow paths 34f in the first state and does not change. This is because since the opening area of the second inlets 17b and the second outlets 18b is significantly large compared with the flow rate of the fluid flowing through the second flow path 12b, even when the opening area of the second inlets 17b and the second outlets 18b changes to some extent from the first state, the change does not influence the flow rate of the fluid.

### [Third State]

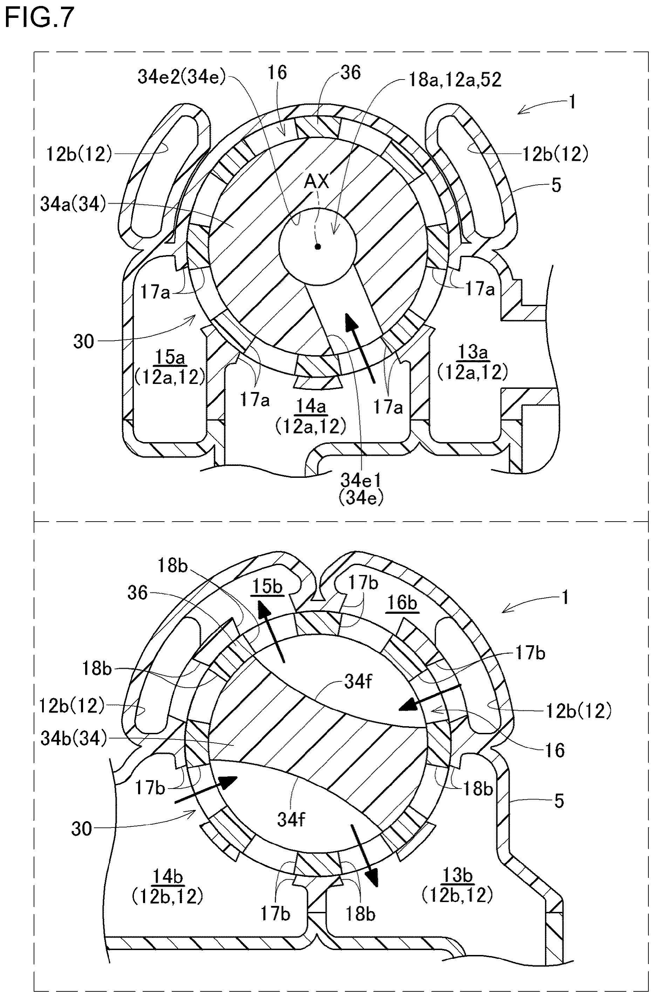

The third state is a state in which, as illustrated in the drawing on the upper side of FIG. 7, the flow control flow path 34e of the first valve portion 34a of the rotor 34 faces only the one of the first inlets 17a of the second preliminary chamber 14a. In FIG. 7, the rotor 34 is rotated in the clockwise direction by 22.5 degrees from the second state illustrated in FIG. 6. On this occasion, only the fluid in the second preliminary chamber 14a among the fluid flowing through the first flow paths 12a flows into the radial flow path 34e1 of the flow control flow path 34e. In the state in FIG. 7, area of the portion of the one of the first inlet 17a of the second preliminary chamber 14a that faces the flow control flow path 34e is the same as the area of the portion of the first inlet 17a of the first preliminary chamber 13a that faces the flow control flow path 34e in the first state, and the flow rate of the fluid flowing in from the second preliminary chamber 14a to the flow control flow path 34e is the same as the flow rate of the fluid flowing in from the first preliminary chamber 13a to the flow control flow path 34e in the first state.

Although even a state in which the rotor 34 has rotated to some extent in the clockwise direction or in the counterclockwise direction from the state in FIG. 7 is still the third state, when the area of the portion of the one of the first inlets 17a of the second preliminary chamber 14a that faces the flow control flow path 34e diminishes, the flow rate of the fluid in the second preliminary chamber 14a flowing into the flow control flow path 34e diminishes according to the facing area. In other words, as with the first state, by rotating the rotor 34, the flow rate of the fluid flowing into the flow control flow path 34e can be controlled. The fluid that has flowed into the radial flow path 34e1 of the flow control flow path 34e, as with the first and second states, flows out from the axial flow path 34e2, flows through a first flow path 12a, and flows into the inflow port 52 of the first water pump 50.

In the third state, the second valve portion 34b is in a state illustrated in the drawing on the lower side of FIG. 7. On this occasion, as with the first and second states, the fluid in the fifth preliminary chamber 14b also flows into the one of the switching flow paths 34f from the other of the second inlets 17b and flows out from the other of the second outlets 18b to the fourth preliminary chamber 13b, and the fluid in the seventh preliminary chamber 16b also flows into the other of the switching flow paths 34f from the other of the second inlets 17b and flows out from the other of the second outlets 18b to the sixth preliminary chamber 15b. The flow rate of the fluid flowing out from the fifth preliminary chamber 14b to the fourth preliminary chamber 13b via the one of the switching flow paths 34f in the third state is the same as the flow rate of the fluid flowing out from the fifth preliminary chamber 14b to the fourth preliminary chamber 13b via the one of the switching flow paths 34f in the first and second states and does not change. In addition, the flow rate of the fluid flowing out from the seventh preliminary chamber 16b to the sixth preliminary chamber 15b via the other of the switching flow paths 34f in the third state is the same as the flow rate of the fluid flowing out from the seventh preliminary chamber 16b to the sixth preliminary chamber 15b via the other of the switching flow paths 34f in the first and second states and does not change.

### [Fourth State]

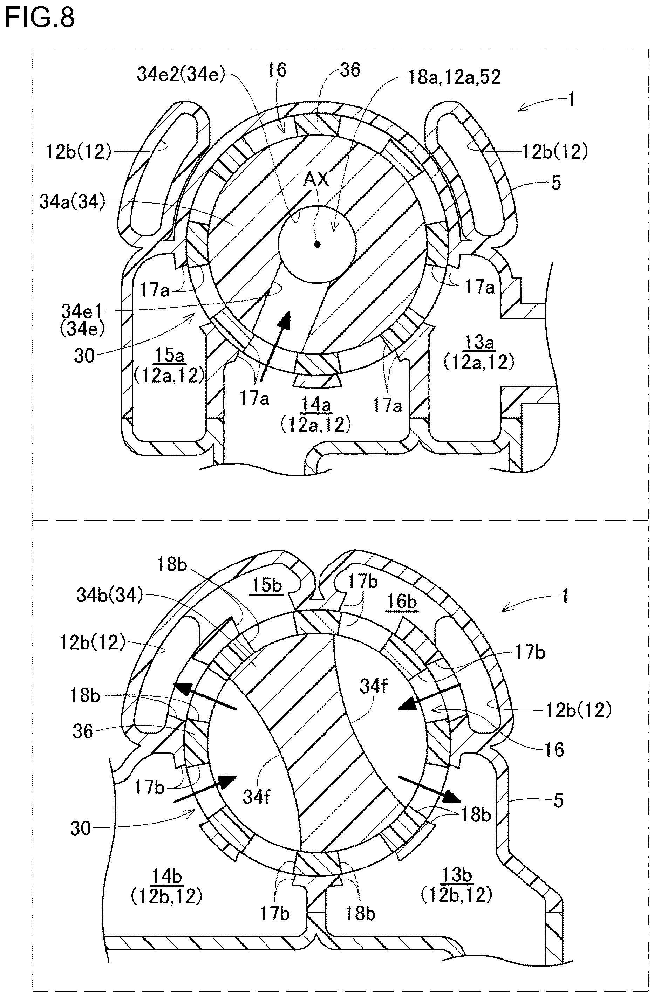

The fourth state is a state in which, as illustrated in the drawing on the upper side of FIG. 8, the flow control flow path 34e of the first valve portion 34a of the rotor 34 faces only the other of the first inlets 17a of the second preliminary chamber 14a. In FIG. 8, the rotor 34 is rotated in the clockwise direction by 45 degrees from the third state illustrated in FIG. 7. On this occasion, only the fluid in the second preliminary chamber 14a among the fluid flowing through the first flow paths 12a flows into the radial flow path 34e1 of the flow control flow path 34e. In the state in FIG. 8, area of a portion of the other of the first inlets 17a of the second preliminary chamber 14a that faces the flow control flow path 34e is the same as the area of the portion of the one of the first inlets 17a of the second preliminary chamber 14a that faces the flow control flow path 34e in the third state, and a flow rate of the fluid flowing in from the second preliminary chamber 14a to the flow control flow path 34e is the same as the flow rate of the fluid flowing in from the second preliminary chamber 14a to the flow control flow path 34e in the third state.

Although even a state in which the rotor 34 has rotated to some extent in the clockwise direction or in the counterclockwise direction from the state in FIG. 8 is still the fourth state, when the area of the portion of the other of the first inlets 17a of the second preliminary chamber 14a that faces the flow control flow path 34e diminishes, the flow rate of the fluid in the second preliminary chamber 14a flowing into the flow control flow path 34e diminishes according to the facing area. In other words, as with the first and third states, by rotating the rotor 34, the flow rate of the fluid flowing into the flow control flow path 34e can be controlled. The fluid that has flowed into the radial flow path 34e1 of the flow control flow path 34e, as with the first to third states, flows out from the axial flow path 34e2, flows through a first flow path 12a, and flows into the inflow port 52 of the first water pump 50.

In the fourth state, the second valve portion 34b is in a state illustrated in the drawing on the lower side of FIG. 8. On this occasion, differing from the first to third states, the fluid in the fifth preliminary chamber 14b flows into the one of the switching flow paths 34f from the other of the second inlets 17b and flows out from the one of the second outlets 18b to the sixth preliminary chamber 15b, and the fluid in the seventh preliminary chamber 16b flows into the other of the switching flow paths 34f from the other of the second inlets 17b and flows out from the one of the second outlets 18b to the fourth preliminary chamber 13b. In other words, in the fourth state, the flow path is switched in such a way that the fluid flows out to preliminary chambers different from those in the first to third states. As described above, although the third state and the fourth state are the same as each other in that the first valve portion 34a performs the flow rate control of the fluid in the second preliminary chamber 14a, the third state and the fourth state differ from each other in that the second valve portion 34b switches the flow path.

### [Fifth State]

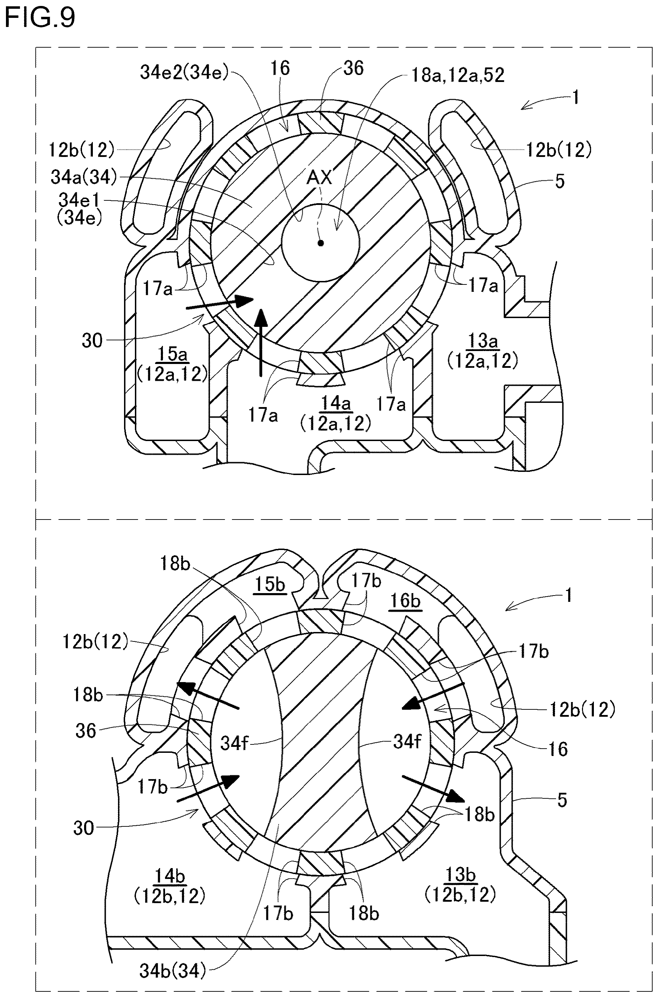

The fifth state is a state in which, as illustrated in the drawing on the upper side of FIG. 9, the flow control flow path 34e of the first valve portion 34a of the rotor 34 faces both the other of the first inlets 17a of the second preliminary chamber 14a and the first inlet 17a of the third preliminary chamber 15a. In FIG. 9, the rotor 34 is rotated in the clockwise direction by 22.5 degrees from the fourth state illustrated in FIG. 8. On this occasion, the fluid in the second preliminary chamber 14a and fluid in the third preliminary chamber 15a among the fluid flowing through the first flow paths 12a flows into the radial flow path 34e1 of the flow control flow path 34e. In the state in FIG. 9, the area of the portion of the other of the first inlets 17a of the second preliminary chamber 14a that faces the flow control flow path 34e is the same as area of a portion of the first inlet 17a of the third preliminary chamber 15a that faces the flow control flow path 34e, and the fluid in the second preliminary chamber 14a and the fluid in the third preliminary chamber 15a flow into the flow control flow path 34e by the same amount. Note, however, that a total flow rate of the fluid flowing into the flow control flow path 34e is less than that in the fourth state. This is because total area of the first inlets 17a facing the flow control flow path 34e is smaller than that in the fourth state.

Even a state in which the rotor 34 has rotated to some extent in the clockwise direction or in the counterclockwise direction from the state in FIG. 9 is still the fifth state. On this occasion, as long as the other of the first inlets 17a of the second preliminary chamber 14a and the first inlet 17a of the third preliminary chamber 15a face the flow control flow path 34e, the total flow rate of the fluid flowing into the flow control flow path 34e does not change. However, when the rotor 34 rotates, the area of the portion of the other of the first inlet 17a of the second preliminary chamber 14a that faces the flow control flow path 34e and the area of the portion of the first inlet 17a of the third preliminary chamber 15a that faces the flow control flow path 34e change. When the areas change, a ratio of the flow rate of the fluid flowing in from the second preliminary chamber 14a to the flow control flow path 34e and the flow rate of the fluid flowing in from the third preliminary chamber 15a to the flow control flow path 34e changes according to the facing areas. The fluid that has flowed into the radial flow path 34e1 of the flow control flow path 34e, as with the first to fourth states, flows out from the axial flow path 34e2, flows through a first flow path 12a, and flows into the inflow port 52 of the first water pump 50.

In the fifth state, the second valve portion 34b is in a state illustrated in the drawing on the lower side of FIG. 9. On this occasion, as with the fourth state, the fluid in the fifth preliminary chamber 14b also flows into the one of the switching flow paths 34f from the other of the second inlets 17b and flows out from the one of the second outlets 18b to the sixth preliminary chamber 15b, and the fluid in the seventh preliminary chamber 16b also flows into the other of the switching flow paths 34f from the other of the second inlets 17b and flows out from the one of the second outlets 18b to the fourth preliminary chamber 13b. The flow rate of the fluid flowing out from the fifth preliminary chamber 14b to the sixth preliminary chamber 15b via the one of the switching flow paths 34f in the fifth state is the same as the flow rate of the fluid flowing out from the fifth preliminary chamber 14b to the sixth preliminary chamber 15b via the one of the switching flow paths 34f in the fourth state and does not change. In addition, the flow rate of the fluid flowing out from the seventh preliminary chamber 16b to the fourth preliminary chamber 13b via the other of the switching flow paths 34f in the fifth state is the same as the flow rate of the fluid flowing out from the seventh preliminary chamber 16b to the fourth preliminary chamber 13b via the other of the switching flow paths 34f in the fourth state and does not change.

### [Sixth State]

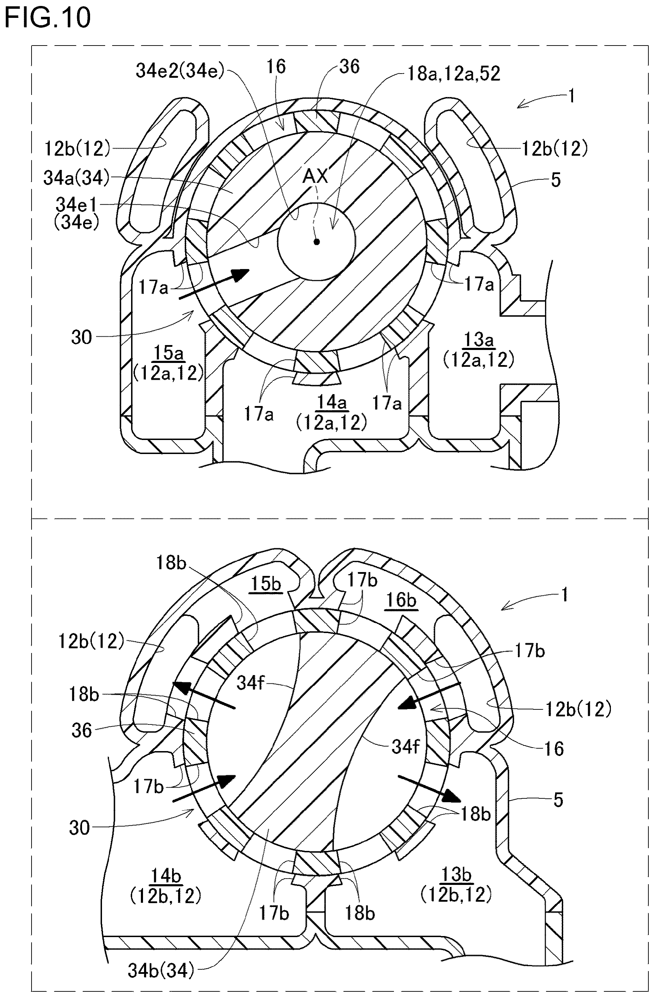

The sixth state is a state in which, as illustrated in the drawing on the upper side of FIG. 10, the flow control flow path 34e of the first valve portion 34a of the rotor 34 faces only the first inlet 17a of the third preliminary chamber 15a. In FIG. 10, the rotor 34 is rotated in the clockwise direction by 22.5 degrees from the fifth state illustrated in FIG. 9. On this occasion, only the fluid in the third preliminary chamber 15a among the fluid flowing through the first flow paths 12a flows into the radial flow path 34e1 of the flow control flow path 34e. In the state in FIG. 10, the area of the portion of the first inlet 17a of the third preliminary chamber 15a that faces the flow control flow path 34e is the same as the area of the portion of the first inlet 17a of the first preliminary chamber 13a that faces the flow control flow path 34e in the first state and the areas of the portions of the one and the other of the first inlets 17a of the second preliminary chamber 14a that face the flow control flow path 34e in the third and fourth states, respectively, and the flow rate of the fluid flowing in from the third preliminary chamber 15a to the flow control flow path 34e is the same as the flow rate of the fluid flowing in from the first preliminary chamber 13a to the flow control flow path 34e in the first state and the flow rate of the fluid flowing in from the second preliminary chamber 14a to the flow control flow path 34e in the third and fourth states.

Although even a state in which the rotor 34 has rotated to some extent in the clockwise direction or in the counterclockwise direction from the state in FIG. 10 is still the sixth state, when the area of the portion of the first inlet 17a of the third preliminary chamber 15a that faces the flow control flow path 34e diminishes, the flow rate of the fluid in the third preliminary chamber 15a flowing into the flow control flow path 34e diminishes according to the facing area. In other words, as with the first, third, and fourth states, by rotating the rotor 34, the flow rate of the fluid flowing into the flow control flow path 34e can be controlled. The fluid that has flowed into the radial flow path 34e1 of the flow control flow path 34e, as with the first to fifth states, flows out from the axial flow path 34e2, flows through a first flow path 12a, and flows into the inflow port 52 of the first water pump 50.

In the sixth state, the second valve portion 34b is in a state illustrated in the drawing on the lower side of FIG. 10. On this occasion, as with the fourth and fifth states, the fluid in the fifth preliminary chamber 14b also flows into the one of the switching flow paths 34f from the other of the second inlets 17b and flows out from the one of the second outlets 18b to the sixth preliminary chamber 15b, and the fluid in the seventh preliminary chamber 16b also flows into the other of the switching flow paths 34f from the other of the second inlets 17b and flows out from the one of the second outlets 18b to the fourth preliminary chamber 13b. The flow rate of the fluid flowing out from the fifth preliminary chamber 14b to the sixth preliminary chamber 15b via the one of the switching flow paths 34f in the sixth state is the same as the flow rate of the fluid flowing out from the fifth preliminary chamber 14b to the sixth preliminary chamber 15b via the one of the switching flow paths 34f in the fourth and fifth states and does not change. In addition, the flow rate of the fluid flowing out from the seventh preliminary chamber 16b to the fourth preliminary chamber 13b via the other of the switching flow paths 34f in the sixth state is the same as the flow rate of the fluid flowing out from the seventh preliminary chamber 16b to the fourth preliminary chamber 13b via the other of the switching flow paths 34f in the fourth and fifth states and does not change.

As described above, since the manifold 1 of the present embodiment has the first rotary valve 30, both the flow rate control and the flow path switching of the fluid flowing through the flow paths 12 can be performed at the same time by rotating the rotor 34. Since the first rotary valve 30 enables the flow rate control and the flow path switching to be performed at the same time by rotating one rotor 34 with one actuator 32, compared with the rotary valve disclosed in Reference 1, the configuration can be simplified and the size can be reduced, and the number of assembly hours can also be reduced and a manufacturing cost can thereby be reduced.

### [Other Embodiments]

(1) Although in the above-described embodiment, the manifold 1 has one first rotary valve 30, one second rotary valve 40, one first water pump 50, and one second water pump 60, the numbers of rotary valves and water pumps can arbitrarily be determined. In addition, the manifold 1 does not have to include a water pump.
(2) Although in the above-described embodiment, it is configured such that the fluid flowing through the flow control flow path 34e of the rotor 34 of the first rotary valve 30 flows into the inflow port 52 of the first water pump 50, it does not have to be configured such that the fluid flows into the first water pump 50.
(3) Although in the above-described embodiment, preliminary chambers from which the fluid flows into the flow control flow path 34e are three preliminary chambers, namely the first preliminary chamber 13a to the third preliminary chamber 15a, the number of preliminary chambers may be two or less or four or more. In particular, providing four preliminary chambers can be achieved by installing a wall between the two first inlets 17a of the second preliminary chamber 14a and thereby dividing the second preliminary chamber 14a into two preliminary chambers.

In the above-described embodiment of the manifold 1, the following configurations are conceived.
<1> One aspect of a manifold (1) includes: a manifold body (5) within which a plurality of flow paths (12, 12a, and 12b) through which fluid flows are formed; and a rotary valve (30) that is formed by arranging a valve body (34) rotating about an axis (AX) in a cylindrical valve chamber (16) formed in the manifold body (5) and that controls flow of the fluid, and the valve body (34) includes a flow control valve portion (34a), a switching valve portion (34b), and a partition portion (34g) that separates the flow control valve portion (34a) and the switching valve portion (34b) from each other.
   According to the present aspect, since the manifold (1) includes the rotary valve (30), both the flow rate control and the flow path switching of the fluid flowing through the flow paths (12, 12a, and 12b) can be performed at the same time by rotating the valve body (34). Since the rotary valve (30) enables the flow rate control and the flow path switching to be performed at the same time by rotating one valve body (34) with one actuator (32), compared with the rotary valve disclosed in Reference 1, the configuration can be simplified and the size can be reduced, and the number of assembly hours can also be reduced and a manufacturing cost can thereby be reduced.
<2> In the manifold (1) according to the above-described <1>, the manifold body (5) may include a first inlet (17a) through which the fluid flows into the flow control valve portion (34a), a first outlet (18a) through which the fluid flows out from the flow control valve portion (34a), a second inlet (17b) through which the fluid flows into the switching valve portion (34b), and a second outlet (18b) through which the fluid flows out from the switching valve portion (34b), the flow control valve portion (34a) may include a flow control flow path (34e) that causes the fluid having flowed in from the first inlet (17a) to flow to the first outlet (18a), the switching valve portion (34b) may include a switching flow path (34f) that causes the fluid having flowed in from the second inlet (17b) to flow to the second outlet (18b), and when the valve body (34) rotates about the axis (AX), a flow rate of the fluid that flows in from the first inlet (17a) to the flow control flow path (34e) of the flow control valve portion (34a) may change and a flow rate of the fluid that flows in from the second inlet (17b) to the switching flow path (34f) of the switching valve portion (34b) and a flow rate of the fluid that flows out from the second outlet (18b) may not change.
   According to the present aspect, by using one valve body (34), the flow rate of the fluid can be controlled in the flow rate control and flow paths can be switched without changing the flow rate of the fluid in the flow path switching.
<3> In the manifold (1) according to the above-described <2>, the flow control flow path (34e) may face the first inlet (17a) in a radial direction of the valve body (34) and face the first outlet (18a) in a direction along the axis (AX).
   According to the present aspect, since the flow control flow path (34e) faces the first inlet (17a) in the radial direction of the valve body (34), it is easy to arrange a plurality of flow paths along a circumferential direction of the valve body.
<4> In the manifold (1) according to any one of the above-described <1> to <3>, the flow control valve portion (34a) and the switching valve portion (34b) may be arranged adjacent to each other in a direction along the axis (AX).

According to the present aspect, since the manifold (1) includes the rotary valve (30), both the flow rate control and the flow path switching of the fluid flowing through the flow paths (12, 12a, and 12b) can be performed at the same time by rotating the valve body (34). Since the rotary valve (30) enables the flow rate control and the flow path switching to be performed at the same time by rotating one valve body (34) with one actuator (32), compared with the rotary valve disclosed in Reference 1, the configuration can be simplified and the size can be reduced, and the number of assembly hours can also be reduced and a manufacturing cost can thereby be reduced.
<5> In the manifold (1) according to any one of the above-described <1> to <4>, the manifold (1) may further include a pump (50) that is attached to the manifold body (5) and pressure-feeds the fluid, and the fluid that flows out from the first outlet (18a) may flow into an inflow port (52) of the pump (50).

According to the present aspect, the fluid having an appropriate flow rate by the flow rate control can be supplied to the pump (50) and thereby pressure-fed.

### [Industrial Applicability]

The present disclosure is applicable to a manifold.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A manifold (1) comprising:
a manifold body (5) within which a plurality of flow paths (12, 12a, and 12b) through which fluid flows are formed; and
a rotary valve (30) that is formed by arranging a valve body (34) rotating about an axis (AX) in a cylindrical valve chamber (16) formed in the manifold body (5) and that controls flow of the fluid, wherein
the valve body (34) includes a flow control valve portion (34a), a switching valve portion (34b), and a partition portion (34g) that separates the flow control valve portion (34a) and the switching valve portion (34b) from each other.

2. The manifold (1) according to Claim 1, wherein
the manifold body (5) includes a first inlet (17a) through which the fluid flows into the flow control valve portion (34a), a first outlet (18a) through which the fluid flows out from the flow control valve portion (34a), a second inlet (17b) through which the fluid flows into the switching valve portion (34b), and a second outlet (18b) through which the fluid flows out from the switching valve portion (34b),
the flow control valve portion (34a) includes a flow control flow path (34e) that causes the fluid having flowed in from the first inlet (17a) to flow to the first outlet (18a),
the switching valve portion (34b) includes a switching flow path (34f) that causes the fluid having flowed in from the second inlet (17b) to flow to the second outlet (18b), and
when the valve body (34) rotates about the axis (AX), a flow rate of the fluid that flows in from the first inlet (17a) to the flow control flow path (34e) of the flow control valve portion (34a) changes, and a flow rate of the fluid that flows in from the second inlet (17b) to the switching flow path (34f) of the switching valve portion (34b) and a flow rate of the fluid that flows out from the second outlet (18b) do not change.

3. The manifold (1) according to Claim 2, wherein the flow control flow path (34e) faces the first inlet (17a) in a radial direction of the valve body (34) and faces the first outlet (18a) in a direction along the axis (AX).

4. The manifold (1) according to any one of Claims 1 to 3, wherein the flow control valve portion (34a) and the switching valve portion (34b) are arranged adjacent to each other in the direction along the axis (AX).

5. The manifold (1) according to any one of Claims 1 to 4, further comprising
a pump (50) that is attached to the manifold body (5) and pressure-feeds the fluid, wherein
the fluid that flows out from the first outlet (18a) flows into an inflow port (52) of the pump (50).
